# EUROPÄISCHE PATENTANMELDUNG

(11) **EP 2 448 096 A1**
(43) Veröffentlichungstag der Anmeldung: **02.05.2012**
(21) Anmeldenummer: 12000114.4
(22) Anmeldetag: 12.11.2008
(51) Int. Cl.: H02K 21/22, H02K 21/04

(54) **Permanent erregte elektrische Maschine**

(30) Priorität: 15.11.2007 DE 102007056116
(62) Teilanmeldung aus: 08850628.2
(71) Anmelder: Compact Dynamics GmbH, 82319 Starnberg (DE)
(72) Erfinder: Gründl, Andreas, Dr., 82319 Starnberg (DE); Hoffmann, Bernhard, 82319 Starnberg (DE)
(74) Vertreter: Schmidt, Steffen

(57) **Zusammenfassung**

Die Erfindung betrifft eine permanenterregte elektrische Maschine mit einem Ständer und einem Läufer. Der Ständer hat eine Spulenanordnung und der Läufer ist mit Permanentmagnet-Elementen versehen, oder der Läufer weist eine Spulenanordnung auf und der Ständer ist mit Permanentmagnet-Elementen versehen. Zwischen dem Ständer und dem Läufer ist ein Luftspalt gebildet, der von den Permanentmagnet-Elementen und mit auf diese in bestimmten Positionen ausgerichteten magnetisch leitenden Zähnen des Ständers begrenzt ist. Die Spulenanordnung weist wenigstens eine hohlzylindrische Wicklung auf, die in dem Ständer zumindest teilweise aufgenommen ist. Der Läufer hat auf von dem Luftspalt abliegenden Seiten der Permanentmagnet-Elemente einen magnetischen Rückschluss. Der magnetische Rückschluss ist aus in Umfangsrichtung des Läufers orientierten Ringen gebildet, die in Axialrichtung des Läufers nicht breiter sind als einzelne der Permanentmagnet-Elemente. Zwischen in Axialrichtung der elektrischen Maschine benachbarten Permanentmagnet-Elementen und/oder in Axialrichtung benachbarten magnetischen Rückschluss-Ringen sind elektrisch/magnetisch wirksame Kurzschluss-Spulen angeordnet.

## Beschreibung

### Hintergrund

Nachstehend ist eine permanent erregte elektrische Maschine beschrieben. Insbesondere geht es um eine Transversalflussmaschine mit einem Ständer und einem Läufer, wobei jeweils entweder der Ständer eine Ständerspule aufweist und der Läufer mit Permanentmagnet-Elementen versehen ist, oder der Läufer eine Läuferspule aufweist und der Ständer mit Permanentmagnet-Elementen versehen ist.

### Begriffsdefinitionen

Unter dem Begriff "Elektrische Maschine" werden hier sowohl Motoren als auch Generatoren verstanden, die als rund laufende Maschinen oder zum Beispiel als Linearmotoren ausgestaltet sein können. Außerdem ist dieses Konzept im Zusammenhang mit rund laufenden Maschinen sowohl bei Innenläufermaschinen als auch bei Außenläufermaschinen einsetzbar.

### Stand der Technik

Aus der EP 0 952 657 A2 ist eine Transversalflussmaschine mit einer Ständeranordnung in einem Ständergehäuse bekannt, in dem ein sich in Umlaufrichtung erstreckendes Polsystem mit U-förmigem Querschnitt angeordnet ist. In der Ausnehmung zwischen den Schenkeln des U-förmigen Querschnitts ist eine sich in Umlaufrichtung erstreckende Ringwicklung aufgenommen. Eine Läuferanordnung hat Reihen von abwechselnd angeordneten Permanentmagneten und Weicheisen-Rückflusselementen. Ständerseitig ist jeweils zwischen der Ringwicklung und der Läuferanordnung ein Tragring vorgesehen, der an beiden Randbereichen Ausnehmungen zur Aufnahme von in Richtung der Läuferanordnung vorstehenden Zähnen des Polsystems aufweist. Der Tragring dient zur Stabilisierung des Polsystems und der Ringspule. Jedes Polsystem besteht aus einem ringförmigen Poljoch und zwei in dessen seitlichen Bereichen daran anschließenden Polringen.

Die DE 195 47 159 A1 zeigt eine Transversalflussmaschine mit Leiterringen, die von U-förmigen, weichmagnetischen Körpern von drei Seiten umschlossen sind, wobei ein magnetischer Kreis von weich und/oder hartmagnetischen Teilen periodisch geschlossen wird. Diese Teile sind durch zwei, radial außerhalb der Leiterringe angeordnete Luftspalte vom jeweiligen U-förmigen, weichmagnetischen Körper getrennt. Die magnetisch aktiven Teile des Läufers oder Ständers sind teilweise axial innerhalb der Enden der U-förmigen weichmagnetischen Körper angeordnet.

Die DE 20 2005 019 162 einen Motor mit einem ringförmigen Ferromagnet, der einen nichtmagnetischen Außenbereich und einen magnetischen Innenbereich aufweist. Diese Anordnung hat insbesondere einen zum Zentrum hin orientierten ringförmigen anisotropen Multipoldauermagnet, wobei dessen Polzahl umgekehrt proportional zur Drehzahl steht. Der anisotrope Multipoldauermagnet hat einen nichtmagnetischen Außenbereich und einen magnetischen Innenbereich. Dabei werden die Magnetkraftlinien des magnetischen Innenbereiches durch den nichtmagnetischen Außenbereich behindert, so dass die Magnetkreise verkleinert werden und der magnetische Fluss somit erhöht wird. Dadurch werden die Magnetkreise verkleinert und der magnetische Fluss somit erhöht, so dass die Leistung des Motors gesteigert wird. Bei herkömmlichen Magneten aus NdFeB oder halbmondförmigen Ferromagneten sind die Magnetkreise größer, wodurch der Verlust der Magnetkraftlinien sehr groß ist, so dass die Leistung des Motors reduziert wird.

Die EP 0 821 464 beschreibt einen Rotor, der aus Glas oder Karbonfaser gebildet ist und in den in einer gedachten Innenschale magnetisierbares Material eingebettet ist.

Aus der EP 0 998 010 ist es bekannt, am Rotor einer Transversalflussmaschine einen Dämpferkäfig aus einem Material mit hoher elektrischer Leitfähigkeit und geringer magnetischer Leitfähigkeit anzuordnen, der die Permanentmagnete und Flussleitstücke zumindest teilweise umgibt. Der Dämpferkäfig ist durch Stege, welche in Richtung des Stators gesehen über den Permanentmagneten und zwischen den Flussleitstücken angeordnet sind, und durch Verbindungsstücke gebildet, welche die Stege miteinander verbinden. Bei der Transversalflussmaschine mit Flusskonzentration können die Permanentmagnete kleiner gestaltet werden. Die Flussleitstücke sind aus Eisen bzw. Eisenlegierungen oder Sinterteilen mit Eisen hergestellt. Die Flussleitstücke können auch aus laminierten Blechen aufgebaut sein.

### Zugrundeliegendes Problem

Das Ziel ist, eine kompakt bauende und hocheffiziente elektrische Maschine bereit zu stellen, die eine hohe Leistungsdichte bei für die Serienfertigung optimiertem Aufbau erlaubt insbesondere für hohe Drehzahlen.

### Lösung

Als Lösung wird eine elektrische Maschine vom Typ Transversalflussmaschine mit einem Ständer und einem Läufer vorgeschlagen, wobei der Ständer eine Spulenanordnung aufweist und der Läufer mit Permanentmagnet-Elementen versehen ist. Zwischen dem Ständer und dem Läufer ist ein Luftspalt gebildet, der von den Permanentmagnet-Elementen und mit auf diese in bestimmten Positionen ausgerichteten magnetisch leitenden Zähne des Ständers begrenzt ist. Die Spulenanordnung weist wenigstens eine hohlzylindrische Wicklung auf, die in dem Ständer zumindest teilweise aufgenommen ist. Der Läufer hat auf der von dem Luftspalt abliegenden Seite der Permanentmagnet-Elemente einen magnetischen Rückschluss. Der magnetische Rückschluss ist aus in Umfangsrichtung orientierten Ringen gebildet, die in Axialrichtung nicht breiter sind als einzelne der Permanentmagnet-Elemente. Zwischen in Axialrichtung der elektrischen Maschine benachbarten Permanentmagnet-Elementen und/oder in Axialrichtung benachbarten Ringen des magnetischen Rückschlusses sind magnetisch wirksame Kurzschluss-Spulen angeordnet.

Diese magnetisch wirksamen Kurzschluss-Spulen sind insbesondere bei hohen Drehzahlen gegen die Magnetfeldkomponente wirksam, die sich in axialer Richtung unerwünscht durch die Statorspulen ausbildet, aber zur Kraftbildung nicht beiträgt. Diese axiale Komponente kann in der Läufertragkonstruktion Wirbelströme mit entsprechend hohen Verlusten bewirken. Diese Wirbelströme werden durch die Kurzschluss-Spulen verlustarm geführt, da in gut elektrisch leitendem Material, und schirmen die Läufertragkonstruktion vor Wirbelströmen wirksam ab.

In einer Alternative der permanent erregten elektrischen Maschine vom Typ Transversalflussmaschine mit einem Ständer und einem Läufer hat der Ständer eine Spulenanordnung und der Läufer ist mit Permanentmagnet-Elementen versehen. Zwischen dem Ständer und dem Läufer ist ein Luftspalt gebildet, der von den Permanentmagnet-Elementen und mit auf diese in bestimmten Positionen ausgerichteten magnetisch leitenden Zähnen des Ständers begrenzt ist. Die Spulenanordnung weist wenigstens eine vorzugsweise kreisringförmige hohlzylindrische Wicklung auf, die in dem Ständer zumindest teilweise aufgenommen ist. Der Läufer hat eine magnetisch nicht wirksame Tragstruktur für die Permanentmagnet-Elemente und die Permanentmagnet-Elemente. Mit anderen Worten ist der Läufer frei von magnetischem Rückschlussmaterial. Vielmehr ist die magnetische Orientierung der Läufermagnete so modelliert, dass trotz fehlendem Weicheisenrückschluss sich im Luftspalt ein ausreichend hohes Permanenterregerfeld bildet. Durch den möglichen Entfall des Weicheisenrückschlusses wird die ungewollte, da nicht zur Kraftbildung beitragende Ausbildung des magnetischen Flusses in axialer Richtung vermieden.

Hierdurch wird eine maximale Ausnutzung des Volumens in der elektrischen Maschine mit sehr hoher Zuverlässigkeit im Betrieb bei geringen Herstellungskosten erreicht. Durch die verbesserte Raumausnutzung erhöht sich außerdem der Wirkungsgrad oder die Leistungsdichte der Maschine.

In einer weiteren Variante einer permanent erregten elektrischen Maschine vom Typ Transversalflussmaschine mit einem Ständer und einem Läufer in einer Außenläuferkonflguration hat der Ständer eine Spulenanordnung und der Läufer ist mit Permanentmagnet-Elementen versehen. Zwischen dem Ständer und dem Läufer ist ein Luftspalt gebildet, der von den Permanentmagnet-Elementen und mit auf diese in bestimmten Positionen ausgerichteten magnetisch leitenden Zähnen des Ständers begrenzt ist.

Die Spulenanordnung hat wenigstens eine vorzugsweise kreisringförmige hohlzylindrische Wicklung, die in dem Ständer zumindest teilweise aufgenommen ist. Der Läufer ist so gestaltet, dass er sich in radialer Richtung bei hohen Drehzahlen des Läufers im Sinne einer Vergrößerung des Luftspaltes verformt. Diese Maßnahme verursacht ein Schwächung des magnetischen Feldes, was bei hohen Drehzahlen wünschenswert sein kann.

Dazu können die Permanentmagnet-Elemente zumindest im Bereich der von dem Luftspalt abliegenden Seite der Permanentmagnet-Elemente an dem Läufer auf einer Lage aus einem Material aufgenommen sind, das so ausgewählt ist, dass sein Elastizitätsmodul eine Verformung bei hohen Drehzahlen des Läufers im Sinne einer Vergrößerung des Luftspaltes hervorruft.

Es ist auch möglich, den Läufer mit seine Verformbarkeit in radialer Richtung ermöglichenden strukturellen Schwächungen versehen ist, so dass eine Verformung des Läufers bei hohen Drehzahlen des Läufers im Sinne einer Vergrößerung des Luftspaltes eintritt.

Eine permanent erregte elektrische Maschine vom Typ Transversalflussmaschine kann einen Ständer und einen Läufer haben, wobei der Ständer eine Spulenanordnung aufweist und der Läufer mit Permanentmagnet-Elementen versehen ist. Zwischen dem Ständer und dem Läufer ist ein Luftspalt gebildet, der von den Permanentmagnet-Elementen und mit auf diese in bestimmten Positionen ausgerichteten magnetisch leitenden Zähnen des Ständers begrenzt ist. Die Spulenanordnung hat wenigstens eine vorzugsweise kreisringförmige hohlzylindrische Wicklung, die in dem Ständer zumindest teilweise aufgenommen ist. Der Läufer ist eisenlos und hat einen magnetischen Rückschluss, der durch entsprechend orientierte Permanentmagnet-Elemente gebildet ist. Damit ist ein eisenloser Rotor geschaffen, bei dem axiale Magnetflüsse (parallel zur Mittellängsachse) im Rotor wirksam minimiert oder eliminiert sind. Als Folge hiervon entfallen auch parasitäre Verluste aufgrund von induzierten Wirbelströmen.

Die Orientierungsrichtung der magnetischen Achse kann bei allen Varianten so gewählt sein, dass sie mit der radialen Richtung einen Winkel zwischen etwa 20° und 80° einschließt, dessen Vertex auf der Mittellinie des Permanentmagnet-Elemente liegt.

### Kurzbeschreibung der Zeichnungen

Weitere Merkmale, Eigenschaften, Vorteile und mögliche Abwandlungen werden für einen Fachmann anhand der nachstehenden Beschreibung verdeutlicht, in der auf die beigefügten Zeichnung Bezug genommen ist.

In Fig. 1a ist eine seitliche schematische Ansicht eines Längsschnittes durch eine Ausführungsform einer permanent erregten elektrischen Maschine vom Typ Transversalflussmaschine veranschaulicht.

In Fig. 1b ist eine schematische Ansicht einer Kurzschlusswicklung für die permanent erregte elektrische Maschine vom Typ Transversalflussmaschine aus Fig. 1a veranschaulicht.

In Fig. 2a ist eine stirnseitige schematische Ansicht eines Querschnittes durch eine permanent erregte elektrische Maschine vom Typ Transversalflussmaschine mit zwei unterschiedlichen Konfigurationen von Permanentmagnet-Elemente veranschaulicht.

In Fig. 2b ist eine seitliche schematische Draufsicht auf einen Haltesteg eines Läufers einer permanent erregten elektrischen Maschine aus Fig. 2a veranschaulicht.

In den Fig. 3a und 3b sind Läufer - Varianten einer Außenläufermaschine vom Typ Transversalflussmaschine veranschaulicht, die sich bei hohen Drehzahlen des Läufers in radialer Richtung im Sinne einer Vergrößerung des Luftspaltes verformen.

### Detaillierte Beschreibung der Zeichnungen

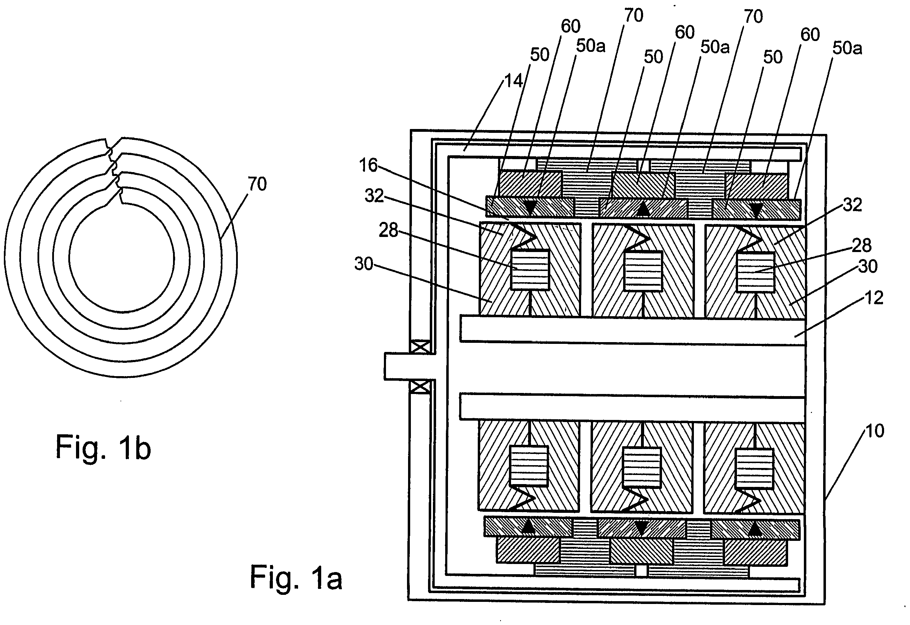

In Fig. 1 ist ein Längsschnitt durch eine Ausführungsform einer permanent erregten elektrischen Maschine 10 vom Typ Transversalflussmaschine mit Klauenpolstator, in der Ausgestaltung als Außenläufermaschine gezeigt. Das veranschaulichte und nachstehend erläuterte Konzept ist jedoch auch für eine Innenläufermaschine einsetzbar. Die elektrische Maschine 10 hat einen Ständer 12 und einen Läufer 14. Zwischen dem Läufer 14 und dem Ständer 12 ist ein Luftspalt 16 gebildet. Der Ständer 12 ist - durch den Luftspalt 16 getrennt - von dem topfförmigen Läufer 14 umgeben, der an seiner einen Stirnfläche eine nicht weiter veranschaulichte Abtriebswelle hat. Die Lagerung des Läufers mittels geeigneter Kugel- oder Rollenlager ist ebenfalls nur schematisch weiter veranschaulicht.

Der Ständer 12 hat eine im Wesentlichen kreisringzylindrische Spulenanordnung 28 mit zwei hohlzylindrischen Wicklungen, die koaxial zur gemeinsamen Mittellängsachse M des Ständers und des Läufers der der Transversalflussmaschine 10 mit Klauenpolstator angeordnet ist. Jede der hohlzylindrischen Wicklungen ist aus im Querschnitt im Wesentlichen rechteckigem Bandmaterial gewickelt und in dem Ständer 12 aufgenommen.

Der Ständer 12 ist in der vorliegenden Ausführungsform mehrteilig aufgebaut, kann aber auch einstückig gestaltet sein. Dazu ist die/jede Wicklung der Spulenanordnung 28 von Schalenteilen 30 eingefasst, die als Magnetfluss-Joch 30 wirken und in einer längs der Mittellängsachse M der Spulenanordnung gelegten Schnittansicht etwa C-förmig gestaltet sind. Jedes Magnetfluss-Joch 30 hat an seiner dem Läufer zugewandten Flanke eine Vielzahl von Zähnen 32, die parallel zur Mittellängsachse M orientiert sind. Jeweils zwei Magnetfluss-Joche 30 umgreifen eine Wicklung von deren jeweiligen Stirnflächen her. Damit sind die Zähne 32 der Magnetfluss-Joche 30 bei einer Innenläufer-Maschine an der innenliegenden Mantelfläche der hohlzylindrischen Wicklungen angeordnet und bei einer Außenläufer-Maschine an der außen liegenden Mantelfläche der hohlzylindrischen Wicklungen. Die ansonsten im Wesentlichen gegengleichen, einer jeweiligen Wicklung zugeordneten Magnetfluss-Joche 30 sind mit ihren jeweiligen Zähnen 32 um eine halbe Zahnteilung versetzt ineinander greifend angeordnet.

Von den Zähnen 32 um den Luftspalt 16 in radialer Richtung beabstandet, sind an dem Läufer 14 Permanentmagnet-Elemente 50 angeordnet, deren magnetische Orientierung zu dem Luftspalt 16 hin jeweils abwechselnd ist. Dies ist durch die abwechselnden Polungen mit den radial nach innen bzw. radial nach außen zeigenden Dreiecken veranschaulicht. In bestimmten Positionen des Läufers 14 relativ zum Ständer 12 fluchten die Permanentmagnet-Elemente 50 einer axialen Reihe des Läufers 14 mit Zähnen 32 einer axialen Reihe des Ständers 12. Die Permanentmagnet-Elemente des Läufers können als Guss- oder Schnitt-Teile aus einer AlNi- oder AlNiCo-Legierung, aus Barium- oder Strontiumferrit, aus einer SmCo-, oder NdFeB-Legierung gebildet sein. Zur Verbesserung der mechanischen Stabilität können die Permanentmagneten auch als Pulverteilchen eingebettet in temperaturbeständige Kunststoffbinder enthaltend zum Beispiel Polyamid, Polyphensulfid, Duroplast, Epoxidharz, oder dergl. gebildet sein. Es kann sich bei dem temperaturbeständigen Kunststoffbinder auch um Methacrylatklebstoff, Epoxidharzkleber, Polyurethanklebstoff, Phenolharzklebstoff, Epoxydharz mit Faserverstärkung, oder hydrophobiertes Epoxydharzgießharz handeln.

Die Permanentmagnet-Elemente 50 können eine Gestalt aufweisen, die im Wesentlichen mit der Gestalt der Zähne 32 übereinstimmt; sie können also rechteckig, trapez- oder dreieck-, bzw. rautenförmig, oder dergl. sein. Die Permanentmagnet-Elemente 50 können in Richtung der Mittellängsachse nur etwa halb so lang wie die mit ihnen fluchtenden Zähne 32. In Richtung der Mittellängsachse zueinander benachbarte Permanentmagnet-Elemente 50 haben ebenfalls eine unterschiedliche magnetische Orientierung. Hieraus resultiert eine schachbrettartig sich abwechselnde Anordnung von gegensinnig orientierten Permanentmagnet-Elementen 50.

Der Läufer 14 hat auf von dem Luftspalt 16 abliegenden Seiten 50a der Permanentmagnet-Elemente 50 einen magnetischen Rückschluss 60, der aus in Umfangsrichtung des Läufers 14 orientierten Ringen aus magnetisch leitendem Material, zum Beispiel Weicheisen gebildet ist. In Axialrichtung des Läufers 14 sind die Ringe schmäler, aber auf jeden Fall nicht breiter als einzelne der Permanentmagnet-Elemente 50, welche die Ringe umgeben.

Zwischen in Axialrichtung der elektrischen Maschine 10 benachbarten Permanentmagnet-Elementen 50 und in Axialrichtung benachbarten magnetischen Rückschluss-Ringen 60 sind elektrisch/magnetisch wirksame Kurzschluss-Spulen 70 - siehe Fig. 1b - aus elektrisch leitendem Bandmaterial, zum Beispiel aus Kupfer oder Aluminium angeordnet.

Anstelle gewickelter Kurzschluss-Spulen können auch in radialer Richtung auf der vom Luftspalt 16 abliegenden Seite der Permanentmagnet-Elemente 50 bzw. des magnetischen Rückschlusses 60 rohrförmige Kurzschlusshülsen angeordnet sein. Anstelle mehrerer rohrförmiger Kurzschlusshülsen bei jedem der Permanentmagnet-Elemente 50 bzw. magnetischen Rückschlüssen 60 kann auch eine durchgehende rohrförmige Kurzschlusshülse vorgesehen sein. Diese durchgehende rohrförmige Kurzschlusshülse kann auch teilweise oder komplett die Rotorträgerfunktion übernehmen.

Die Kurzschluss-Spulen 70 überragen in der gezeigten Variante die magnetischen Rückschluss-Ringe 60 in radialer Richtung und stützen sich an der Innenwand des Läufers ab.

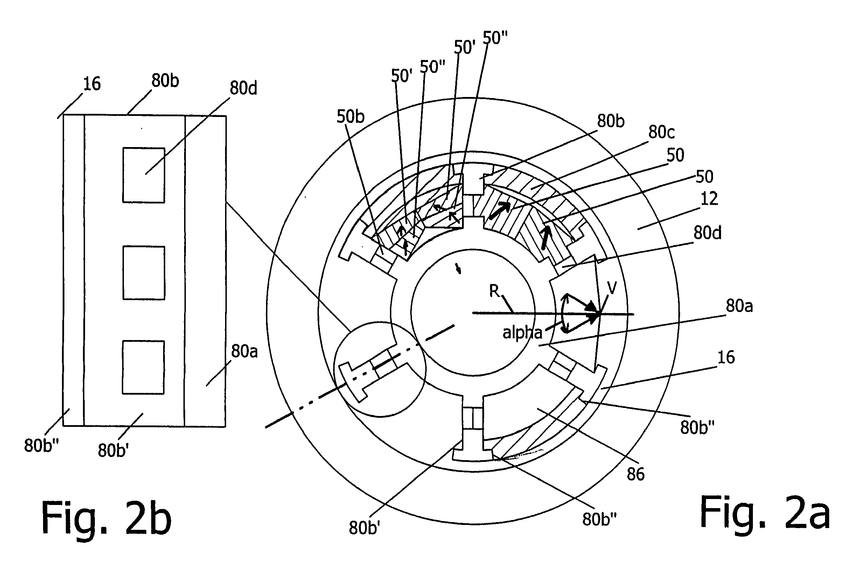

Als Variante zu Fig. 1a, 1b ist in Fig. 2 eine permanenterregte elektrische Maschine 10 vom Typ Transversalflussmaschine mit Klauenpolstator mit einem vergleichbar gestalteten und daher nur schematisch veranschaulichten Ständer 12 und einem Läufer 14 als Innenläuferausführung gezeigt. In ihrer Wirkung, Struktur und/oder Funktion im Vergleich zu Fig. 1a, 1b übereinstimmende Komponenten sind mit übereinstimmenden Bezugszeichen versehen und nicht noch einmal extra erläutert.

Auch bei dieser Variante der permanenterregten elektrischen Maschine vom Typ Transversalflussmaschine hat der Ständer eine Spulenanordnung und der Läufer ist mit Permanentmagnet-Elementen versehen. Zwischen dem Ständer und dem Läufer ist ein Luftspalt gebildet, der von den Permanentmagnet-Elementen und mit auf diese in bestimmten Positionen ausgerichteten magnetisch leitenden Zähnen des Ständers begrenzt ist. Der Läufer hat eine mehrteilige magnetisch nicht wirksame Tragstruktur 80a, 80b, 80c für die Permanentmagnet-Elemente 50 und die Permanentmagnet-Elemente 50. Die Tragstruktur hat ein Trägerrohr 80a, an dessen Außenumfang radial abstehende, gleichmäßig entlang des Umfangs verteilte Haltestege 80b angeformt sind. Die Haltestege 80b haben eine in der stirnseitigen Draufsicht (siehe Fig. 2a) im Wesentlichen T-förmige Gestalt, wobei in ihrem radial orientierten Stegabschnitt 80b' rechteckig gestaltete Aussparungen 80d eingearbeitet sind (siehe Fig. 2b), in die entsprechend geformte Zapfen 50b der Permanentmagnet-Elemente 50 eingreifen.

Die in den Permanentmagnet-Elementen 50 eingezeichneten Pfeile deuten die Magnetorientierung an. Die Haltestege 80b haben an ihrem dem Luftspalt 16 zugewandten freien Ende in tangentialer Richtung orientierte Haltevorsprünge 80b". Jeweils zwei einander zugewandte Haltevorsprünge 80b" benachbarter Haltestege 80b nehmen eine gekrümmte Halteplatte 80c mit entsprechend geformten Kantenbereichen auf. Das Trägerrohr 80a und jeweils zwei, an dessen Außenumfang radial abstehende Haltestege 80b bilden zusammen mit der gekrümmten Halteplatte 80c einen Aufnahmeraum 86 für die Permanentmagnet-Elemente 50. Der Läufer bzw. die Tragstruktur sind dabei aus magnetisch nicht oder nahezu nicht wirksamem Material gebildet. Damit hat der Läufer keinen magnetischen Rückschluss. Anstelle der gekrümmten Halteplatte 80c können die in tangentialer Richtung orientierten Haltevorsprünge 80b" so weit vorspringen, dass sie die Haltefunktion für die Permanentmagnet-Elemente 50 allein übernehmen können.

Bei der in Fig. 2a gezeigten Variante sind als "Untervariante" auf der linken Seite die Permanentmagnet-Elemente 50 als in radialer Richtung geteilte Elemente 50', 50" ausgestaltet, während auf der rechten Seite die Permanentmagnet-Elemente 50 in radialer Richtung ungeteilt, also einstückig sind. Diese Teilung der Permanentmagnet-Elemente 50 erlaubt eine besonders vorteilhafte Führung des Magnetflusses und resultiert somit auch in einem minimalen Streufluss. Es versteht sich, dass in einer elektrischen Maschine alle Permanentmagnet-Elemente 50 in gleicher Weise gestaltet, also entweder geteilt oder ungeteilt sind. Anstelle der mehrteiligen Permanentmagnet-Elemente 50 kann auch ein monolithischer Magnetformkörper verwendet werden, dem die sich in seinem Volumen ändernde magnetische Orientierung durch entsprechende Aufmagnetisierung aufgeprägt wurde.

Die dem Luftspalt zugewandten Halteelemente 80b 80c können auch magnetisch leitend ausgeführt sein, zum Beispiel aus Weicheisen.

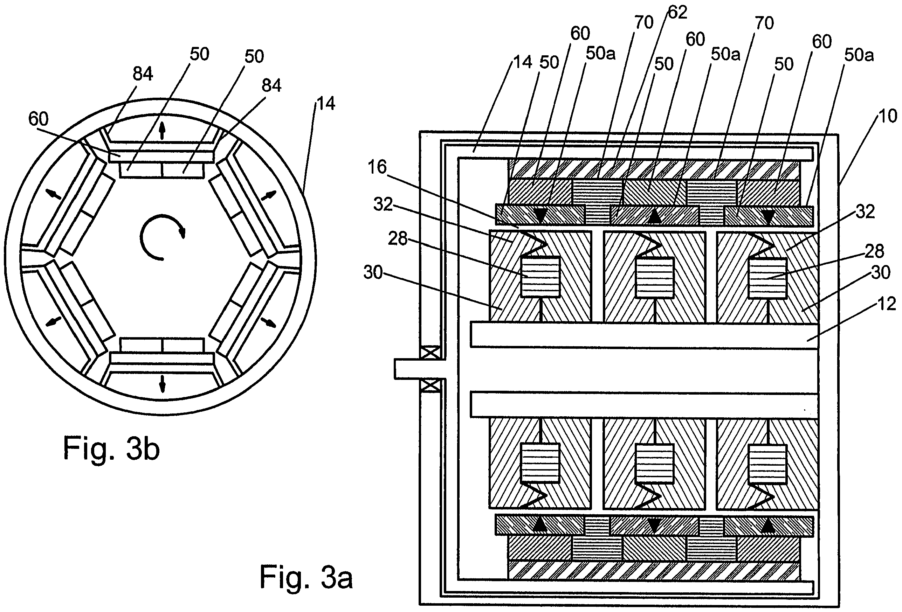

In Fig. 3a ist ein Läufer 14 einer Außenläufermaschine vom Typ Transversalflussmaschine veranschaulicht, wobei der die Permanentmagnet-Elemente 50 tragende Läufer 14 sich in radialer Richtung bei hohen Drehzahlen des Läufers 14 im Sinne einer Vergrößerung des Luftspaltes 16 verformt. Dazu sind die Permanentmagnet-Elemente 50 über einen elastisch verformbaren Materialstreifen, zum Beispiel Gummi oder dergl. an dem Läufer 14 befestigt. Das Material ist so ausgewählt, dass abhängig von seiner Gestalt und/oder seines Elastizitätsmoduls eine Verformung bei hohen Drehzahlen des Läufers 16 im Sinne einer Vergrößerung des Luftspaltes 16 entsteht. In Fig. 3b ist gezeigt, wie zusätzlich oder anstelle davon der Läufer 14 einer Außenläufermaschine vom Typ Transversalflussmaschine mit seine Verformbarkeit in radialer Richtung ermöglichenden strukturellen Schwächungen 84 versehen ist, so dass eine Verformung des Läufers bei hohen Drehzahlen des Läufers 16 im Sinne einer Vergrößerung des Luftspaltes 16 - in Richtung der radialen Pfeile in Fig. 3b - eintritt. Die Orientierungsrichtung der magnetischen Achse ist bei allen gezeigten Varianten so gewählt, dass sie mit der radialen Richtung einen Winkel zwischen etwa 20° und 80° einschließt, dessen Vertex V in der Mitte des Permanentmagnet-Elementes 50 liegt.

Die in den Fig. gezeigten Verhältnisse der einzelnen Teile und Abschnitte der Transversalflussmaschine mit Klauenpolstator hiervon zueinander und deren Abmessungen und Proportionen sind nicht einschränkend zu verstehen. Vielmehr können einzelne Abmessungen und Proportionen auch von den gezeigten abweichen. Im Übrigen sind auch einzelne Aspekte der unterschiedlichen Varianten der Transversalflussmaschine miteinander kombinierbar, ohne hier im Detail veranschaulicht zu sein.

## Patentansprüche

1. Permanenterregte elektrische Maschine (10) vom Typ Transversalflussmaschine mit Klauenpolstator, mit einem Ständer (12) und einem Läufer (14), wobei
- der Ständer (12) eine im wesentlichen kreisringförmige Spulenanordnung (28) aufweist, deren Mittelachse mit der Mittellängsachse des Läufers im wesentlichen übereinstimmt, und der Läufer mit Permanentmagnet-Elementen (50) versehen ist,
- zwischen dem Ständer (12) und dem Läufer (14) ein Luftspalt (16) gebildet ist, der von den Permanentmagnet-Elementen (50) und mit auf diese in bestimmten Positionen ausgerichteten magnetisch leitenden Zähnen (32) des Ständers (12) begrenzt ist, wobei
- die Spulenanordnung (28) wenigstens eine hohlzylindrische Wicklung aufweist, die in dem Ständer (12) zumindest teilweise aufgenommen ist, und
- der Läufer (14) eine magnetisch nicht wirksame Tragstruktur (80a, ... 80c) für die Permanentmagnet-Elemente (50) und die Permanentmagnet-Elemente (50) aufweist, wobei die magnetisch nicht wirksame Tragstruktur aus mehreren zusammen zu fügenden Komponenten (80a, ... 80c) gebildet ist.

2. Permanenterregte elektrische Maschine (10) nach Anspruch 6, bei der die magnetisch nicht wirksame Tragstruktur (80a, ... 80c) zumindest teilweise aus Kupfer, Aluminium, Titan, oder dergl. enthaltendem, elektrisch leitendem Bandmaterial gebildet ist.

3. Permanenterregte elektrische Maschine (10) nach Ansprüche 6 oder 7, bei der die magnetisch nicht wirksame Tragstruktur (80a, ... 80c) zumindest teilweise aus einem elektrischen Isolator, wie Kunststoff oder dergl. gebildet ist.

4. Permanenterregte elektrische Maschine (10) nach einem der vorhergehenden Ansprüche, bei der die Permanentmagnet-Elemente (50) als Bauteile geformt sind, die gesinterte oder in Kunststoff gebundene Permanentmagnet-Partikel aufweisen.
